**Europäisches Patentamt**

**European Patent Office**

**Office européen des brevets**

(11) Veröffentlichungsnummer: **0 189 779**
**B1**

# EUROPÄISCHE PATENTSCHRIFT

(45) Veröffentlichungstag der Patentschrift:
**02.11.88**

(51) Int. Cl.⁴: **G 03 B 21/64**

(21) Anmeldenummer: **86100411.7**

(22) Anmeldetag: **14.01.86**

(54) Einstückiger Rahmen aus Kunststoff für ein Film-Diapositiv.

(30) Priorität: **17.01.85 DE 3501425**

(43) Veröffentlichungstag der Anmeldung:
**06.08.86 Patentblatt 86/32**

(45) Bekanntmachung des Hinweises auf die Patenterteilung:
**02.11.88 Patentblatt 88/44**

(84) Benannte Vertragsstaaten:
**AT BE CH FR GB IT LI LU NL SE**

(56) Entgegenhaltungen:
**EP-A-0 064 014**
**DE-B-1 128 681**
**DE-B-2 516 493**
**FR-A-1 102 106**
**US-A-3 069 795**

(73) Patentinhaber: **GEIMUPLAST PETER MUNDT GmbH & Co. KG, Partenkirchner Strasse 50, D-8105 Farchant (DE)**

(72) Erfinder: **Mundt, Peter, Wankweg 9, D-8100 Garmisch- Partenkirchen (DE)**
Erfinder: **Neuhold, Arnhold, Esterbergstrasse 37a, D-8105 Farchant (DE)**
Erfinder: **Pohl, Claus, Dipl.- Ing., Haidestrasse 1, D-8116 Eschenlohe (DE)**

(74) Vertreter: **Lorenz, Eduard, Rechtsanwälte Eduard Lorenz - Bernhard Seidler Margrit Seidler - Dipl.- Ing. Hans- K. Gossel Dr. Ina Philipps - Dr. Paul B. Schäuble Dr. Siegfried Jackermeier, Widenmayerstrasse 23 D-8000 München 22 (DE)**

## Beschreibung

Die Erfindung bezieht sich auf einen einstückigen Rahmen aus Kunststoff für ein Filmdiapositiv, mit einem zentralen Fenster, mit einer das Fenster umgebenden, versenkten Auflagefläche für das eingeführte, das Fenster überdeckende Diapositiv, wobei das Diapositiv beim Einführen und in Endlage zwischen der Auflagefläche und der Auflagefläche gegenüberliegenden Halteelementen geführt wird und die Halteelemente im wesentlichen aus durchgehend, sich in Einführungsrichtung des Diapositivs erstreckenden Haltestreifen bestehen.

Ein derartiger Rahmen ist aus der DE-PS-1 128 681 bekannt. Der bekannte Rahmen weist an zwei einander gegenüberliegenden Seiten des zentralen Fensters von der Auflagefläche und den übergreifenden Wandteilen gebildete Führungsnuten zum Einschieben des Diapositivs auf, wobei die Einschiebeöffnung für das Diapositiv gegenüber diesen Nuten versetzt liegt und das Diapositiv biegsam ist. Der Druckschrift ist nicht zu entnehmen, daß der einteilige Kuntstoff-Diarahmen elastisch wäre. Anstatt der Vorsprünge könnten auch durchgehende übergreifende Wandteile verwendet werden, sofern diese nur eine Einschuböffnung freilassen. Es würde sich dann aber eine kompliziertere Spritzgußform ergeben. Zum Herausnehmen eines eingeschobenen Diapositivs muß man an der Spitze eines V- förmigen Randes mit einer Haarnadel od. dgl. unter den Rand des eingeschobenen Diapositivs greifen und kann dieses dann ausheben. Ein derartiger Rahmen ist wie folgt verbesserungsbedürftig: Die Einschiebeöffnung für das Diapositiv (= Filmbetthöhe) ist zu schmal, um gewölbten Film rahmen zu können. Außerdem besteht die Gefahr des Verkratzens. Die freien Ränder des Diapositivs können sich in eingeschobener Stellung leicht nach oben krümmen, z. B. bei Erwärmung des Diapositivs im Projektor. Für eine automatische Rahmung ist der bekannte Rahmen nicht geeignet; zumindest wäre eine solche schwierig.

Aus der DE-PS-700 519 war ferner ein Rahmen bekannt, der aus zwei Rahmenhälften besteht, die gegeneinander umlegbar sind. Ein derartiger Rahmentyp ist für eine automatische Rahmung nicht geeignet, da ein Verschließen erst nach dem Einlegen des geschnittenen Diapositivs möglich ist. Das Diapositiv sowie die dieses einbettenden Deckglasplatten sind durch Plattenränder gehalten, die nach derselben Richtung hin rechtwinklig zu einer Rahmenhälfte umgebogen sind. Diese Plattenränder bilen eine Aufnahme für das Diapositiv sowie dessen Deckglasplatten. Gewölbter Film kann vor dem Verschließen aus der Projektionslage rutschen. Der Materialaufwand ist ähnlich hoch wie bei dem später noch zu behandelnden DE-GM-7 234 660.

Aus dem DE-GM-1 815 522 ist eine Fassung für Filmabschnitte mit die Randfläche der Filmabschnitte aufnehmenden und haltenden Rahmenteilen bekannt, bei welcher die Rahmenteile durch ein einstückiges Formteil gebildet sind und das Bildfenster seitlich einen umlaufenden Aufnahmeschlitz für den Filmabschnitt aufweist, der zur Bildung einer Einführöffnung für den Filmabschnitt eines Rahmenteils einseitig offen ist. Dieser bekannte Rahmen hat einen relativ großen Materialaufwand und erfordert zur Herstellung ein teueres, störungsanfälliges Werkzeug mit Schiebermechanik. Das Filmbett ist relativ dick (größer als 0,3 mm). Infolgedessen ist nur eine unzulängliche Fixierung des Films im Rahmen gewährleistet.

Aufgrund des DE-GM-7 234 660 ist ferner ein Diapositiv-Rahmen aus Kunststoff Stand der Technik, der einen vorzugsweise mit einem ringsumlaufenden Rand versehenen Rahmenteil und einen vorzugsweise innerhalb des Rahmens eingebetteten, als flacher Deckel ausgebildeten Rahmenteil aufweist, die mittels eines Filmscharniers miteinander verbunden sind. Auch dieser Rahmen hat einen hohen Materialeinsatz. Ferner ist das Herstell-Werkzeug aufwendig, weil die projizierte Fläche des aufgeklappten Rahmens sehr groß ist. Das Scharnier ist überdies anfällig. Es ist ein zusätzlicher Arbeitsgang zum Verschließen des Rahmens notwendig. Schließlich ist eine teuere Zusatz-Einrichtung, nämlich eine Ultraschall-Schweißmaschine zum Verschließen des Rahmens erforderlich.

Der Erfindung liegt die Aufgabe zugrunde, den eingangs beschriebenen Rahmen derart zu verbessern, daß er ohne Schwierigkeiten einer automatischen Rahmung unterworfen werden kann, insbesondere daß er aufgrund geringen Werkzeug-, Material- und Arbeitsaufwandes möglichst billig herzustellen ist.

Die Lösung der gestellten Aufgabe erfolgt durch die Kombination der Merkmale, daß die Haltestreifen mittels schmaler Verbindungsstege, die sich senkrecht zur Einführungsrichtung des Diapositives erstrecken, an den einander gegenüberliegenden Seiten eines zentralen Fensters des einteiligen Rahmenkörpers angebracht sind und das Kunststoffmaterial des Rahmenkörpers derart elastisch biegbar ist, daß sich zwischen Haltestreifen und Aufnahmefläche eine Einführöffnung für das Diapositiv ergibt. Der erfindungsgemäße Rahmen besteht, schlagwortartig ausgedrückt, nur noch aus einer Rahmenhälfte. Durch den erfindungsgemäßen Rahmen sind nachstehende neue Anwendungsmöglichkeiten erschlossen:

Als provisorische Rahmung von Umkehrfilmen für nachfolgende Archivierung mit gleichzeitiger Möglichkeit einer schnellen Projektion; als besonders billiger Rahmen von Umkehrfilmen für geringe Ansprüche bzw. geringe Anzahl von Projektionen sowie als Vorführ-Rahmen für Kunden, die in Glas rahmen wollen, aber vorher zur Auswahl der rahmungswürdigen Bilder diese projizieren wollen. Für alle diese Anwendungszwecke brauchten besondere Augenmerke auf Stabilität, z. B. Wärmestabilität usw. Lage und Fixierung des Films im Rahmen nicht gelegt werden.

Der Gegenstand des Anspruchs 2 hat den Vorteil, daß bei der Herstellung für das Werkzeug ein Schieber eingespart werden kann.

Die Erfindung ist in der nachstehenden Beschreibung anhand der Zeichnung in einer Ausführungsform beispielhaft erläutert. Es zeigen:

Fig. 1 eine Draufsicht auf eine Seite des Rahmens;

Fig. 2 einen Schnitt durch einen Rahmen nach Fig. 1 und

Fig. 3 den Rahmen während des Rahmungsvorganges mit einem Diapositiv.

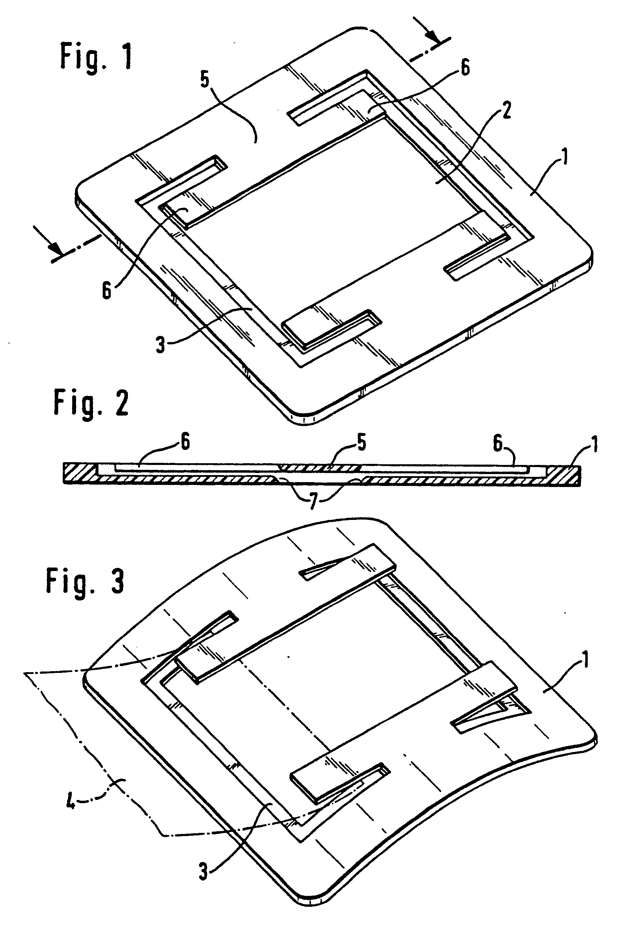

Der einstückig aus elastischem Kunststoff hergestellte Rahmen besteht im wesentlichen aus einem einzigen Rahmenkörper 1 mit einem Zentralfenster 2. Um das Fenster 2 herum ist eine dieses umgebende, versenkt angeordnete Auflagefläche 3 für das eingeführte, das Fenster 2 überdeckende Diapositiv 4 ausgebildet. An zwei einander gegenüberliegenden Seiten des Fensters 2 sind über die Auflagefläche 3 hinausgreifende Vorsprünge vorgesehen. Jeder Vorsprung besteht aus einem sich senkrecht zur Einführrichtung des Diapositivs 4 erstreckenden Vebindungssteg 5 sowie einem sich dazu senkrecht, in Einführrichtung des Diapositivs 4 erstreckenden Haltestreifen 6. Die Haltestreifen erstrecken sich parallel zu den ihnen benachbarten Auflageflächen 3 und übergreifen das das Fenster 2 überdeckende Diapositiv 4, und zwar bis zu den sich senkrecht zu den Haltestreifen 6 erstreckenden Abschnitten der Auflageflächen 3. Zwischen dem Verbindungssteg 5 und dem diesem gegenüber liegenden Abschnitt der Auflagefläche 3 ist eine Führungsnut gebildet, wie Fig. 2 erkennen läßt. Die an den Unterbrechungen der Auflagefläche 3 gebildeten Kanten sind mit Einführschrägen 7 für das Diapositiv 4 ausgebildet.

Wie sich aus Fig. 3 ergibt, ist eine einfache Rahmung durch Biegeaufweitung möglich. Die Biegeaufweitung kann manuell oder maschinell ausgeführt werden. Die maschinelle Biegeaufweitung erfolgt im wesentlichen gemäß der DE-PS-1 810 092.

Die Vorteile des erfindungsgemäßen Rahmens sind folgende:

Minimaler Materialaufwand durch reduzierte Abdeckung der nicht projizierten Flächen der Filmabschnitte; nach dem Spritzvorgang ist kein zusätzlicher Arbeitsvorgang z. B. Verschließen und Ultraschallschweißen, wie beim bekannten Scharnierrahmen, notwendig, so daß ein geringer Arbeits- und Maschinenaufwand gewährleistet sind; bessere Ausnutzung des Werkzeugs als beim Scharnierrahmen, weil die projizierte Fläche nur halb so groß ist; für die Herstellung reicht ein einfaches Werkzeug ohne zusätzliche, bewegte Formteile (Schieber) aus; einfache Rahmung durch Biegeaufweitung; "Aufweitklemmung" möglich; das Filmstück wird durch einen umlaufenden Rand im Filmbett gehalten; durch die Biegeaufweitung des Rahmens besteht keine Gefahr, daß das Diapositiv beim Einschieben verkantet oder verkratzt wird; nach dem teilweisen Einschieben und nach dem Abschneiden des Diapositivs kann dieses, wie gleichfalls an sich bekannt, durch ein Greifwerkzeug, insbesondere eine Zange, in seine Endlage gezogen werden; das Diapositiv kann umgekehrt durch Verbiegen des Rahmenkörpers auch wieder leicht aus dem Rahmen herausgenommen werden.

**Patentansprüche**

1. Einstückiger Rahmen aus Kunststoff für ein Film-Diapositiv (4), mit einem zentralen Fenster (2),mit einer das Fenster (2) umgebenden, versenkten Auflagefläche (3) für das eingeführte, das Fenster (2) überdeckende Diapositiv (4), wobei das Diapositiv (4) beim Einführen und in Endlage zwischen der Auflagefläche (3) und der Auflagefläche (3) gegenüberliegenden Halteelementen (5, 6) geführt wird und die Halteelemente (5, 6) im wesentlichen aus durchgehend, sich in Einführungsrichtung des Diapositivs erstreckenden Haltestreifen (6) bestehen,

dadurch gekennzeichnet, daß

a) die Haltestreifen (6) mittels schmaler Verbindungsstege (5), die sich senkrecht zur Einführungsrichtung des Diapositivs (4) erstrecken, an den einander gegenüberliegenden Seiten des zentralen Fensters (2) des einteiligen Rahmenkörpers (1) angebracht sind und

b) das Kunststoffmaterial des Rahmenkörpers (1) derart elastisch biegbar ist, daß sich zwischen Haltestreifen (6) und Auflagefläche (3) eine Einführöffnung für das Diapositiv ergibt.

2. Rahmen nach Anspruch 1, dadurch gekennzeichnet, daß die Auflagefläche im Bereich des Verbindungssteges unterbrochen ist.

3. Rahmen nach Anspruch 2, dadurch gekennzeichnet, daß die an den Unterbrechungen der Auflagefläche gebildeten Kanten mit Einführschrägen ausgebildet sind.

**Claims**

1. An integral frame made of plastics for a film transparency (4), comprising a central window (2), a recessed bearing surface (3), which surrounds the window (2) and serves to support the transparency (4), which has been inserted and covers the window (2) and which during its insertion and in its final position is guided between the bearing surface (3), and retaining elements (5, 6), which are opposite to the bearing surface (3) and substantially consist of retaining strips (6), which extend continuously in the direction in which the transparency is inserted, characterized in that

a) the retaining strips (6) are attached to the mutually opposite sides of the central window (2) of the integral frame body (1) by means of narrow connecting webs (5), which extend at right angles to the direction in which the transparency (4) is inserted, and

b) the plastics material of the frame body (1) is so elastically flexible that an entrance opening for the transparency is formed between the retaining strips (6) and the bearing surface (3).

2. A frame according to claim 1, characterized in that the bearing surface is interrupted adjacent to the connecting web.

3. A frame according to claim 2, characterized in that the edges formed at the interruptions of the bearing surface are formed with chamfers for the insertion.

**Revendications**

1. Cadre en matière plastique en une pièce pour diapositives (4) comportant une fenêtre centrale (2) avec une surface d'appui (3) enfoncée, entourant la fenêtre (2) pour la diapositive (4) insérée et recouvrant la fenêtre (2), la diapositive (4) étant guidée lors de l'insertion et dans sa position finale entre la surface d'appui (3) et les éléments de fixation (5, 6) se trouvant opposés à la surface d'appui (3), les éléments de fixation (5, 6) consistant principalement en bandes de fixation (6) traversantes et s'étendant en direction de l'insertion de la diapositive, caractérisé en ce que

a) les bandes de fixation (6) sont placées au moyen d'entretoises minces (5) qui s'étendent perpendiculairement au sens d'insertion de la diapositive (4) sur les côtés réciproquement opposés de la fenêtre centrale (2) du corps de cadre en une pièce et que

b) le matériau plastique du corps de cadre (1) est élastiquement flexible de sorte qu'entre les bandes de fixation (6) et la surface d'appui (3) il résulte une ouverture d'insertion pour la diapositive.

2. Cadre selon la revendication 1 caractérisé en ce que la surface d'appui est interrompue dans la zone de l'entretoise.

3. Cadre selon la revendication 2 caractérisé en ce que les arêtes formées par les interruptions de la surface d'appui sont formées comme chanfrein pour l'insertion.

Fig. 1

Fig. 2

Fig. 3